# EUROPÄISCHE PATENTSCHRIFT

(11) **EP 1 207 078 B1**
(45) Veröffentlichungstag und Bekanntmachung des Hinweises auf die Patenterteilung: **10.01.2007**
(21) Anmeldenummer: 01127125.1
(22) Anmeldetag: 15.11.2001
(51) Int. Cl.: B60R 5/04

(54) **Laderaum-Abdeck-und/oder Laderaum-Trennvorrichtung für den Lade- oder Gepäckraum eines Fahrzeugs**
Load compartment cover and/or load compartment partitioning device for a vehicle load or luggage compartment
Couvercle et/ou dispositif séparateur pour le compartiment de charge ou de bagages d'un véhicule

(30) Priorität: 20.11.2000 DE 10057572
(43) Veröffentlichungstag der Anmeldung: 22.05.2002
(73) Patentinhaber: BOS GmbH & Co. KG, 73760 Ostfildern (DE); AUDI AG, 85057 Ingolstadt (DE)
(72) Erfinder: Sitzler, Wolfgang, 42111 Wuppertal (DE); Faber, Wolfgang, 42659 Solingen (DE); Crisp, Terence Sam, 3140 Keerbergen (BE); Hötter, Wolfgang, 92345 Dietfurt (DE)
(74) Vertreter: Patentanwälte Ruff, Wilhelm, Beier, Dauster & Partner

(56) Entgegenhaltungen:
- WO-A-98/43854
- DE-A- 4 123 655
- FR-A- 2 810 935
- GB-A- 2 310 173
- PATENT ABSTRACTS OF JAPAN Bd. 1998, Nr. 03, 27. Februar 1998 (1998-02-27) & JP 9 301077 A (ARACO CORP), 25. November 1997 (1997-11-25)
- PATENT ABSTRACTS OF JAPAN Bd. 2000, Nr. 16, 8. Mai 2001 (2001-05-08) & JP 2001 010409 A (KANTO AUTO WORKS LTD), 16. Januar 2001 (2001-01-16)

## Beschreibung

Die Erfindung betrifft eine Laderaum-Abdeck- und/oder Laderaum-Trennvorrichtung für den Lade- oder Gepäckraum eines Fahrzeugs, wie z.B. eines Kombinationskraftwagens od. dgl., entsprechend dem Anspruch 1. Eine solche Laderaum-Abdeck- und/oder Trennvorrichtung ist beispielsweise in der JP 09301077, in der FR 2810935 und in der DE 43 36 380 C2 beschrieben.

Aus der JP 09301077 geht eine gattungsgemäße Laderaumabdeckung hervor, die aus einem Kassettengehäuse zur Aufnahme einer flexiblen Werkstoffbahn und aus zwei parallel zueinander angeordneten, schwenkbar im Laderaum eines Kraftfahrzeugs angebrachten Schwenkarmen besteht. Die Laderaumabdeckung ist derart im Laderaum angebracht, dass sie durch eine Schwenkbewegung der Schwenkarme an eine Rückenlehne einer den Laderaum nach vorne begrenzenden Sitzbank angenähert werden kann oder durch eine entgegengesetzte Schwenkbewegung entfernt von der Rückenlehne abgelegt werden kann.

Aus der FR 2810935 geht eine Laderaumabdeckung hervor, bei der ein zur Aufnahme der flexiblen Werkstoffbahn bestimmtes Kassettengehäuse fest an einer durch mehrere Schwenkhebel gebildeten Schwenkkinematik angebracht ist und synchron zu einer Position einer Rückenlehne eines Fahrzeugsitzes verschwenkt werden kann.

Die bekannte Vorrichtung gemäss der DE 43 36 380 C2 weist als Aufnahmehalterung ein Rollogehäuse auf, welches als Werkstoffbahn eine entgegen dem Rückstellmoment eines Federmotors von einer Wickelwelle abrollbare Netzbahn enthält. Der innenseitige Rand der Netzbahn ist an der Wickelwelle befestigt und der freie endseitige Randbereich der Netzbahn ist mit einer Haltestange versehen, deren etwa pilzkopfartige beiden Halteenden in taschenförmigen Aufnahmen innen unterhalb des Fahrzeugdachs lösbar formschlüssig gehalten sind.

Das Rollogehäuse gemäss der DE 43 36 380 C2 ist in im einzelnen nicht dargestellter Weise rückseitig der Rücksitzlehne einer FondSitzreihe angebracht (vgl. DE 43 36 380 C2 Spalte 3 Zeilen 52-56).

Eine Aufnahmehalterung (Rollogehäuse) entsprechend der durch die DE 43 36 380 C2 bezeichneten Gattung kann, wie etwa in der DE 44 38 910 C1 beschrieben, neben einer vertikal aufspannbaren Netzbahn auch eine horizontal aufspannbare Werkstoffbahn in einem gesonderten Werkstoffspeicher, wie z.B. auf einer Wickelwelle, enthalten. In einem solchen Falle bildet die Netzbahn eine Rückhalte- oder Trennvorrichtung und die horizontal aufspannbare Werkstoffbahn, z.B. in Form eines Rollotuchs, eine Laderaumabdeckung.

Zusätzlich ist es außerdem möglich, in der Aufnahmehalterung einen dritten Werkstoffspeicher für eine insbesondere senkrecht nach unten aufspannbare Werkstoffbahn, beispielsweise in Form einer Netzbahn, vorzusehen, um in Fahrzeugfahrtrichtung nach vorn offene Lücken, z.B. durch Umgruppierung von Sitzen entstanden, schließen zu können. Grundsätzlich können derartige Werkstoffbahnen auch als gesonderten Werkstoffspeichern (z.B. Wickelwellen) zugeordnete Werkstoff-Längsteilbahnen, etwa wie in der EP 0 909 679 A2 beschrieben, ausgebildet sein.

In der Praxis ist folgende Anbringung des Rollogehäuses (Aufnahmehalterung) gemäss der DE 43 36 380 C2 üblich: Die Fondsitzgruppe weist drei Sitzflächen bei einer durchgehenden Sitzbank oder bei einem Einzelsitz und einem Doppelsitz auf. Die Sitzlehne ist entsprechend im Verhältnis 1/3 : 2/3 geteilt. Die 1/3-Sitzlehne ist einer randseitigen Einzelsitzfläche bzw. einem randseitigen Einzelsitz, zugeordnet, während die Doppelsitzlehne den beiden anderen verbleibenden Sitzflächen, entweder einer insgesamt durchgehenden Sitzbank oder einer Doppelsitzbank, zugeordnet ist.

Sowohl die 1/3-Sitzlehne als auch die 2/3-Sitzlehne sind schwenkarretierbar angeordnet. Die Aufnahmehalterung (Rollogehäuse) ist lediglich rückseitig der 2/3-Sitzlehne lösbar mittels etwa schwalbenschwanzförmiger Befestigungsmittel gehalten. Wenn also die Vorrichtung gemäss der DE 43 36 380 C2 aus dem Fahrzeug entnommen werden soll, müssen beide Sitzlehnen nach vorn verschwenkt und die Aufnahmehalterung (Rollogehäuse) quer zur Fahrtrichtung aus dem schwalbenschwanzförmigen Formschluss heraus verschoben und seitlich durch eine offene hintere Fahrzeugtür entnommen werden.

Ansonsten gestattet die Vorrichtung gemäss der DE 43 36 380 C2 noch die Möglichkeit, die an der Aufnahmehalterung (Rollogehäuse) nicht befestigte 1/3-Sitzlehne im Falle eines längeren Ladeguts nach vorn zu klappen, wobei die Netzbahn in ihrem aufgespannten Zustand verbleiben kann. Außerdem ist es bei der bekannten Vorrichtung möglich, - zweckmäßig nach Einrollen der Netzbahn - die 2/3-Sitzlehne einschließlich der an ihr angebrachten Aufnahmehalterung gemeinsam mit der 1/3-Sitzlehne im Bedarfsfall in Fahrtrichtung nach vorn zu schwenken.

Die Aufgabe der Erfindung besteht darin, eine Laderaum-Abdeck- und/oder Trennvorrichtung zu schaffen, die ein sicheres passgerechtes Einlegen der Aufnahmehalterung ermöglicht.

Diese Aufgabe wird entsprechend der Gesamtheit der Merkmale des Patentanspruchs 1 gelöst.

Dabei ist jede armseitige Befestigungsstelle etwa nach Art einer Konsole ausgebildet, auf welche die Aufnahmehalterung aufgelegt oder in welche die Aufnahmehalterung eingelegt und lösbar zu befestigen ist.

Eine solche Konsole bildet einen U-förmigen Querschnitt mit einem Auflagesteg, an welchen sich bezüglich der Bewegungsrichtung des Haltearms vorn und hinten je ein Befestigungssteg anschliesst.

Jede Konsole U-förmigen Querschnitts weist einen sich zwischen den beiden Befestigungsstegen erstreckenden, vom jeweils benachbarten Endbereich der Aufnahmehalterung wegweisenden Begrenzungssteg auf. Damit ist jede Konsole etwa taschenartig ausgebildet und gestattet ein sicheres passgerechtes Einlegen der Aufnahmehalterung, beispielsweise eines Rollogehäuses.

Eine bevorzugte Ausführungsform entsprechend der Erfindung ist dadurch gekennzeichnet, dass die beiden Endbereiche der Aufnahmehalterung jeweils in einer Konsole angeordnet sind. Eine solche erfindungsgemässe Anordnung ist grundsätzlich mit einem Haltearm, besser jedoch noch mit zwei Haltearmen, zu verwirklichen.

In weiterer Ausgestaltung der Erfindung weist jeder Haltearm eine armseitige Befestigungsstelle auf.

Für den Fall, dass zwei Haltearme vorgesehen sind, ist es zweckmässig, die beiden Haltearme durch ein Bewegungs-Kupplungselement bewegungseinheitlich miteinander zu verbinden.

Ein solches Bewegungs-Kupplungselement kann beispielsweise von einer beide Haltearme miteinander verbindenden Kupplungstraverse gebildet sein.

Eine von der Erfindung bevorzugte Ausführungsform besteht darin, dass jeder Haltearm ein um eine Drehachse schwenkbarer Schwenkarm ist. Von der bereits erwähnten Rückhaltevorrichtung für den Laderaum von Kraftfahrzeugen (s. DE 44 38 910 C1) ist eine parallel zur Sitzlehnen-Schwenkachse einer Fondsitzreihe schwenkbare Trennplatte bekannt, welche in ihrer Ruheposition einen Laderaumboden überlagert. An ihrem freien Ende ist die Trennplatte mit einer Aufnahmehalterung für drei Werkstoffbahnen versehen.

Durch Hochschwenken der Trennplatte bis an die Fondsitzlehnen heran und nach Arretierung der Trennplatte in ihrer hochgeschwenkten Position befindet sich die Anordnung in ihrer ein Ausbreiten der Werkstoffbahnen gestattenden Betriebsposition. Die der Vorrichtung gemäss der DE 43 36 380 C2 anhaftenden Probleme werden indessen auch durch die Rückhaltevorrichtung gemäss der DE 44 38 910 C1 nicht gelöst.

Eine alternative erfindungsgemäße Ausführungsform besteht darin, dass jeder Haltearm einen Teleskoparm bildet.

Weitere zweckmäßige Merkmale entsprechend der Erfindung sind zusätzlichen Unteransprüchen zu entnehmen.

In den Zeichnungen sind vorteilhafte Ausführungsbeispiele entsprechend der Erfindung dargestellt. Es zeigen
Fig. 1 eine schematische räumliche Teildarstellung einer Laderaumabdeck- und Laderaum-Trennvorrichtung,
Fig. 2 eine räumliche Teildarstellung in Anlehnung an Fig. 1,
Fig. 3 eine auseinandergezogene Teildarstellung in Anlehnung an Fig. 1,
Fig. 4 die schematische Darstellung einer anderen Ausführungsform einer Laderaum-Abdeck- und Trennvorrichtung in einer ersten Betriebsposition,
Fig. 5 die Ausführungsform gemäß Fig. 4 in anderen Betriebspositionen,
Fig. 6 eine Draufsicht entsprechend dem in Fig. 5 mit VI gekennzeichneten Sichtpfeil und
Fig. 7 eine räumliche Darstellung einer Aufnahmehalterung.

In den Zeichnungen sind die beiden unterschiedlich ausgestalteten Laderaum-Abdeck- und Trennvorrichtungen unabhängig von ihrer individuellen Ausführungsform jeweils mit der Bezugsziffer 10 versehen und im übrigen allgemein mit "Vorrichtung" bezeichnet.

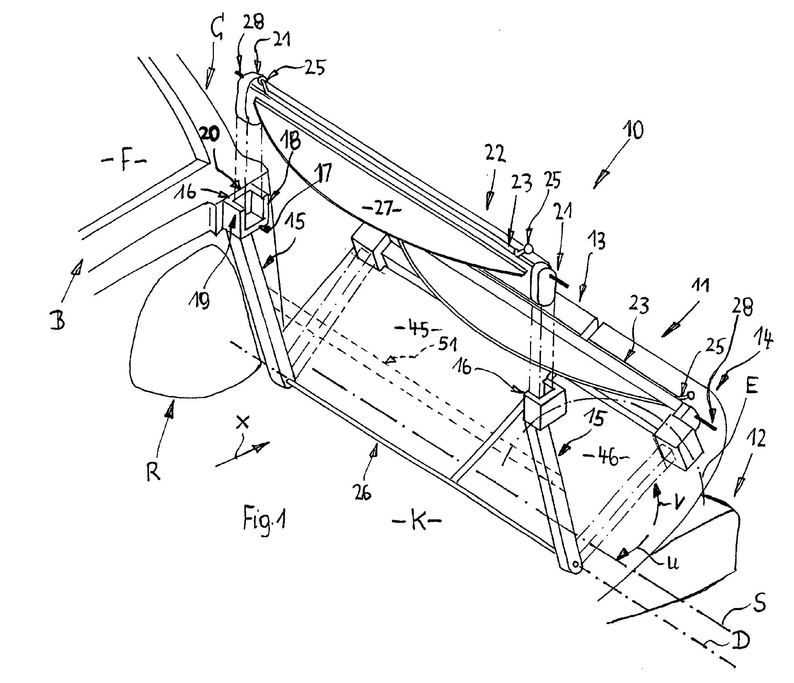

Anhand der Darstellung gemäß Fig. 1 ist ein Koffer- bzw. Laderaum K eines Kombinationskraftwagens vorstellbar, von dessen Karosserie ein innerer Bereich R einer hinteren Radhausverkleidung, eine C-Säule C sowie eine horizontale Strebe B eines Fensters F angedeutet sind.

Die Fahrtrichtung der Kraftfahrzeuges ist mit x angegeben.

Eine Fondsitzanordnung 11 weist eine Sitzbank 12, eine 2/3-Sitzlehne 13 sowie 1/3-Sitzlehne 14 auf.

Die Sitzlehnen 13 und 14 sind um eine gemeinsame Sitzlehnen-Schwenkachse S unabhängig voneinander entlang dem Schwenkpfeil v nach oben oder entlang dem Schwenkpfeil u nach unten klappbar und zumindest in der nicht dargestellten aufrechten Stellung schwenkarretierbar. In Fig. 1 dargestellt ist die nach vorn (Schwenkpfeil u) und unten geklappte Position beider Sitzlehnen 13, 14.

Jeweils am freien Ende zweier um eine gemeinsame Drehachse D schwenkbarer Haltearme 15 ist eine haltearmseitige Befestigungsstelle in Form einer etwa taschenartigen Konsole 16 befestigt. Jede Konsole 16 weist einen etwa U-förmigen Querschnitt auf, welcher von einem Auflagesteg 17, einem vorderen Befestigungssteg 18, einem hinteren Befestigungssteg 19 und von einem jeweils nach außen weisenden Begrenzungssteg 20 begrenzt ist.

Die beiden Konsolen 16 dienen der formschlüssigen Aufnahme von zwei Endbereichen 21 einer Aufnahmehalterung, hier eines insgesamt mit 22 bezeichneten Rollogehäuses.

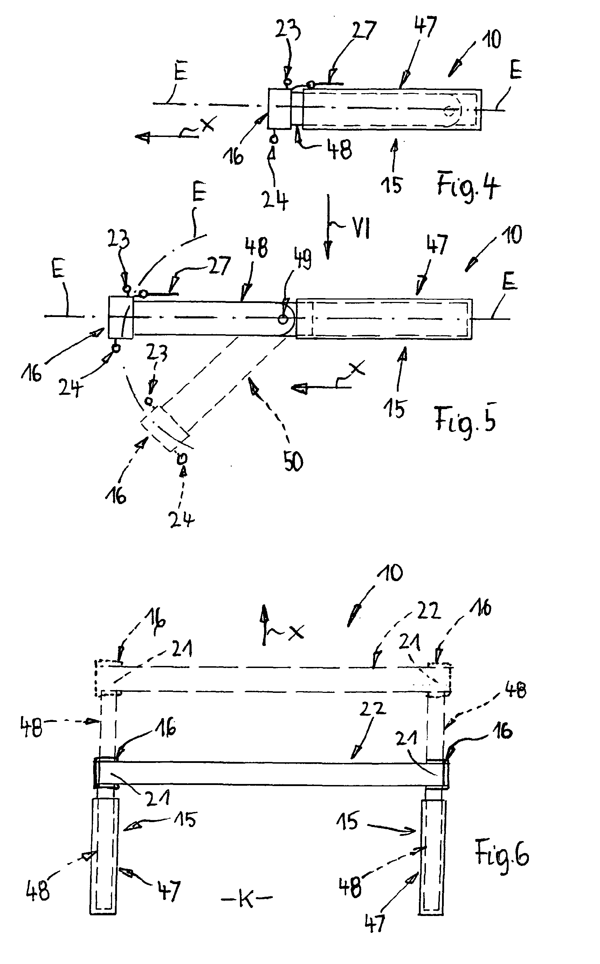

Das Rollogehäuse 22 kann eine Werkstoffbahn oder mehrere Werkstoffbahnen enthalten. Im vorliegenden Fall sind in dem Rollogehäuse 22 eine Netzbahn, die vertikal aufgespannt werden kann und eine horizontal aufspannbare Abdeck-Rollobahn jeweils auf einer eigenen Wickelwelle aufgenommen. Außerdem kann das Rollogehäuse, wie in den Fig. 4 und 5 angedeutet, auf einer eigenen Wickelwelle eine nach unten ausziehbare Netzbahn aufnehmen.

Die Netzbahnen selbst sind nicht sichtbar, jedoch sind deren am jeweiligen freien Rand befestigte Haltestangen 23 (Fig. 1) und 24 (Fig. 4 und 5) schematisch dargestellt. Die beidendseitig an den Haltestangen vorgesehenen Halteenden, z.B. die beiden Halteenden 25 der Haltestange 23, können in nicht gezeigter Weise innenraumseitig des Kombinationskraftwagens, z.B. die Halteenden 25 benachbart dem Fahrzeugdach, eingehängt werden.

Die beiden Schwenk- bzw. Haltearme 15 der Vorrichtung 10 sind mittels einer Kupplungswelle 26 drehstarr miteinander bewegungsgekuppelt.

In Fig. 1 ist zum einen die aufrechte Position und zum anderen (strichpunktiert) die entsprechend dem Schwenkteil u nach vorn und unten geklappte Position der beiden Haltearme 15 dargestellt.

Die Drehachse D der beiden Schwenk- bzw. Haltearme 15, welche zugleich durch die Kupplungswelle 26 verläuft, erstreckt sich entweder koaxial oder achsparallel (letzteres ist in Fig. 1gezeigt) zur Sitzlehnen-Schwenkachse S.

Anhand von Fig. 1 ist auch vorstellbar, dass sowohl die horizontal aufspannbare Abdeck-Rollobahn, von der lediglich das Endbord 27 dargestellt ist, als auch die Netzbahn mit ihrer Haltestange 23 (s.a. Halteenden 25) unabhängig von der Schwenkposition der Haltearme 15 aufspannbar und fahrzeugseitig lösbar zu befestigen sind.

In Fig. 1 ist die teilkreisförmige Bewegungsbahn E, entlang welcher die beiden Konsolen 16 bewegbar sind, strichpunktiert angedeutet (s. dazu analog die mit E bezeichneten strichpunktierten Linien in Fig. 4 und 5).

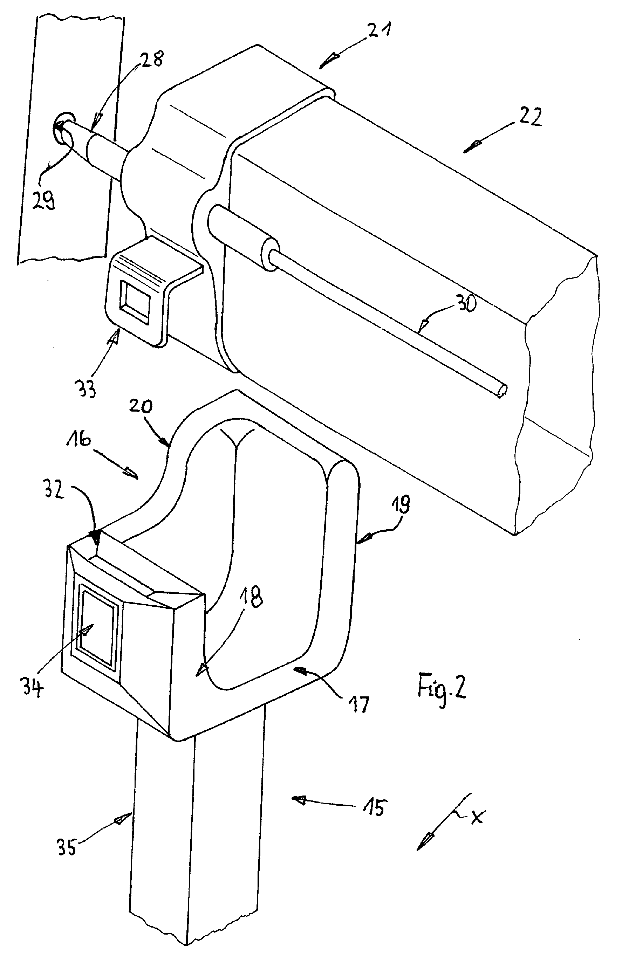

Entlang der jeweiligen Bewegungsbahn E sind die Konsolen 16 stufenweise lösbar zu arretieren, was mittels linear beweglicher Sperrzapfen 28 des Rollogehäuses 22 geschieht. Die Sperrzapfen 28 wirken mit in Fig. 2 schematisch gezeigten fahrzeugseitigen Riegelöffnungen 29 zusammen. Die beiden Sperrzapfen 28 sind über ein Betätigungsgestänge 30, welches mittels einer Drucktaste 31 zu bedienen ist, linear antreibbar.

Zur formschlüssigen lösbaren Halterung der Endbereiche 21 des Rollogehäuses 22 in den Konsolen 16 weisen letztere nach Art von Gurtschlössern von Fahrzeuginsassen-Haltegurten ausgebildete Steckaufnahmen 32 auf, in welche an den Endbereichen 21 des Rollogehäuses 22 gehaltene Steckbefestigungszungen 33 lösbar eingreifen können. Die gurtschlossartigen Steckaufnahmen 32 sind über Drucktasten 34 zu entriegeln.

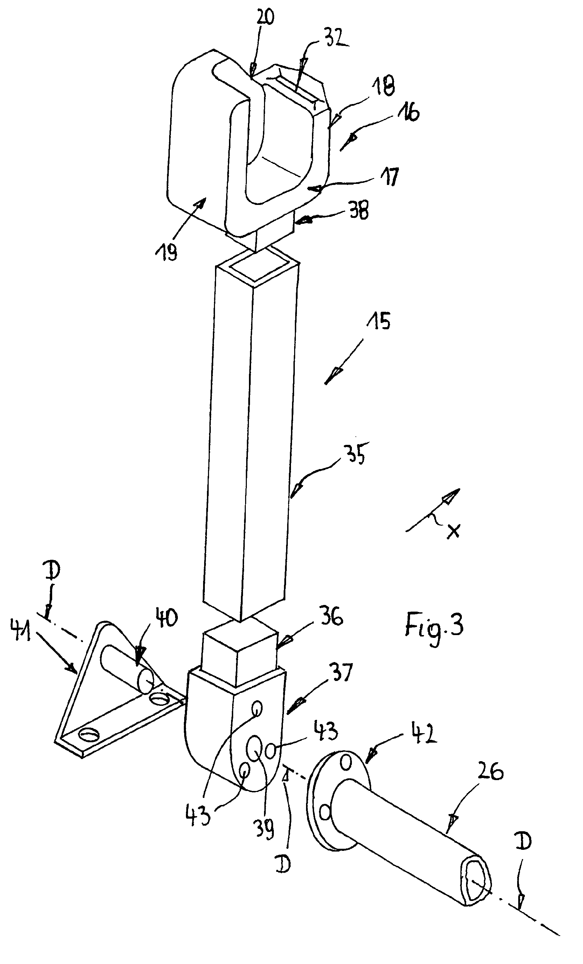

Der Aufbau eines Haltearms 15 ist aus Fig. 3 zu ersehen. Der Haltearm 15 weist einen Rechteck-Profilabschnitt 35 auf, in welchen unten ein Steckzapfen 36 eines Drehlagerblocks 37 und oben ein Steckzapfen 38 der Konsole 16 eingreifen.

Der Drehlagerblock 37 ist mit seiner Lagerbohrung 39 auf den Lagerzapfen 40 eines fahrzeugseitig schraubbefestigten Lagerbocks 41 axial aufgeschoben. Mittels eines Flansches 42 ist die Kupplungswelle 26 über nicht dargestellte Schraubbolzen in Gewindelöchern 43 des Drehlagerblocks 37 schraubbefestigt. Die Steckzapfen 36, 38 sind in nicht dargestellter Weise lösbar oder unlösbar in dem Rechteck-Profilabschnitt befestigt.

Eine Schwenkarretierung der Haltearme 15 entlang der Bewegungsbahn E ist zusätzlich zur Sperrzapfenanordnung 28, 29 oder alternativ zu letzterer grundsätzlich auch dadurch möglich, dass in nicht dargestellter Weise stufenweise oder stufenlose Arretierungsmittel zwischen den Lagerzapfen 40 und den Drehlagerblöcken 37 vorgesehen ist.

Unter Berücksichtigung etwaiger Besonderheiten des jeweiligen einzelnen Anwendungsfalles kann eine lösbare Anbindung der schwenkbaren Anordnung 15, 15, 22 der Vorrichtung 10 an eine Sitzlehne oder an beide Sitzlehnen 13, 14 zweckmäßig sein. Eine solche lösbare Anbindung kann z.B. allein deswegen zweckmäßig sein, um Klappergeräusche bei der heruntergeklappten Anordnung 15, 15, 22 (vgl. Fig. 1) zu vermeiden.

Hierzu weist das Rollogehäuse 22 (s. Fig. 7) eine Sperrklinke bzw. Sperrfalle 43 auf, welche mittels einer Drucktaste 44 zu bedienen ist und welche mit einer nicht gezeigten Verriegelungsaussparung (z.B. eines ohnehin vorhandenen Sitzlehnenschlosses) beispielsweise an den rückseitigen Lehnenflächen 45, 46 zusammenwirkt.

Bei der Ausführungsform entsprechend den Fig. 4-6 sind die Haltearme 15 nach Art je einer Teleskopschiene oder eines Teleskoprohres ausgebildet. In einem Teleskopaußenrohr 47 rechteckförmigen Querschnittes ist ein Teleskopinnenrohr 48, welches ebenfalls einen rechteckförmigen Querschnitt aufweist, mit Schiebesitz gleitverschieblich entlang der Bewegungsbahn E aufgenommen.

Die Konsolen 16 in den Fig. 4-6 entsprechen den Darstellungen der Fig. 1-3. Ebenso entspricht das Rollogehäuse 22 den Darstellungen in den Fig. 1-3 in Verbindung mit der Darstellung in Fig. 7.

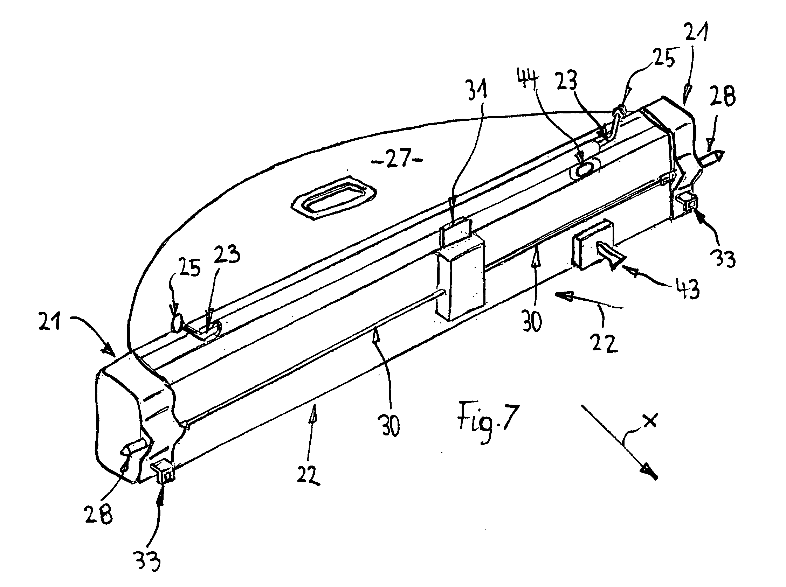

Die mit ihren Teleskopaußenrohren 47 innerhalb des Fahrzeugs längsseits angeordneten und im Parallelabstand voneinander befestigten beiden Haltearme 15 sind in Fig. 4 (vgl. ebenfalls durchgezogene Darstellung gemäß Fig. 6) in ihrer Ausgangsposition unmittelbar hinter den nicht dargestellten Sitzlehnen 13, 14 positioniert.

Sobald beide Sitzlehnen 13, 14 in nicht dargestellter Weise heruntergeklappt sind, können die Teleskopinnenrohre 48 aus den Teleskopaußenrohren 47 herausgezogen werden (vgl. durchgezogene Darstellung gemäß Fig. 5; strichlinierte Darstellung gemäß Fig. 6). In der herausgezogenen Position (vgl. Fig. 5 durchgezogene Darstellung; Fig. 6 strichlinierte Darstellung) übergreift das Rollogehäuse 22 die nicht gezeigte Sitzlehnen-Schwenkachse S in Fahrtrichtung x nach vorn.

In der gestreckten Lage der Haltearme 15 können sowohl das obere Haltenetz mit der Haltestange 23 als auch das untere Haltenetz mit der Haltestange 24 aufgespannt und fahrzeuginnenseitig lösbar befestigt werden.

Alternativ ist es auch möglich, Neigelager 49 zu aktivieren, d.h. zu entsperren, so dass vordere Bereiche 50 der Teleskopinnenrohre 48 gemäß der Strichliniendarstellung in Fig. 5 entlang kreisförmiger Bewegungsbahnen E nach unten geklappt und in nicht dargestellter Weise arretiert werden können, wobei es zur lückenlosen Sicherung des Ladeguts genügt, lediglich die obere Netzbahn mit ihrer Haltestange 23 nach oben hin aufzuspannen.

Zur Bewegungskupplung der beiden Konsolen 16 der aus Fig. 6 ersichtlichen beiden Haltearme 15 genügt an sich das in den beiden Konsolen 16 aufgenommene Rollogehäuse 22, welches zugleich die Funktion einer Traverse ausfüllt.

In Fig. 1 ist eine Traverse 51 mit Strichlinien eingezeichnet, welche zusätzlich oder anstelle der Kupplungswelle 26 ein Bewegungs-Kupplungselement bilden kann.

## Patentansprüche

1. Laderaum-Abdeck- und/oder Laderaum-Trennvorrichtung (10), für den Lade- oder Gepäckraum (K) eines Fahrzeugs, wie z.B. eines Kombinationskraftwagens od. dgl., mit einer Aufnahmehalterung (22), wie z.B. mit einem Rollogehäuse, für mindestens eine Werkstoffbahn, deren innenseitiger Randbereich seitens der Aufnahmehalterung (22), z.B. an einer Wickelwelle, befestigt, und deren endseitiger freier Randbereich (bei 23; 24; 27) fahrzeugseitig lösbar zu befestigen ist, wobei die Aufnahmehalterung (22) benachbart der Sitzlehnenrückseite (45, 46) einer mindestens eine schwenkbare Sitzlehne (13, 14) aufweisenden Sitzanordnung (11) gehalten ist, wobei mindestens mittelbar fahrzeugseitig mindestens ein bewegbarer Haltearm (15) gelagert ist, welcher für die Aufnahmehalterung (22) eine armseitige Befestigungsstelle bildet, welche, ausgehend von einer der Sitzlehnenrückseite (45, 46) benachbarten Betriebsposition der Laderaum-Abdeck- und/oder Laderaum-Trennvorrichtung (10), im wesentlichen quer zur Sitzlehnen-Schwenkachse (S) über letztere hinweg bewegbar ist und welche entlang ihrer Bewegungsbahn (E) stufenweise oder stufenlos lösbar zu arretieren ist, **dadurch gekennzeichnet, dass** die Befestigungsstelle als taschenartige Konsole (16) ausgeführt ist, die einen etwa U-förmigen Querschnitt aufweist, der von einem Auflagesteg (17), einem vorderen Befestigungssteg (18), einem hinteren Befestigungssteg (19) und von einem jeweils nach außen weisenden Begrenzungssteg (20) begrenzt ist.

2. Laderaum-Abdeck- und/oder Laderaum-Trennvorrichtung nach Anspruch 1, **dadurch gekennzeichnet, dass** die beiden Endbereiche (21) der Aufnahmehalterung (22) jeweils in einer Konsole (16) angeordnet sind.

3. Laderaum-Abdeck- und/oder Laderaum-Trennvorrichtung nach Anspruch 2, **dadurch gekennzeichnet, dass** jeder Haltearm (15) eine armseitige Befestigungsstelle (16) aufweist.

4. Laderaum-Abdeck- und/oder Laderaum-Trennvorrichtung nach Anspruch 3, **gekennzeichnet durch** zwei Haltearme (15).

5. Laderaum-Abdeck- und/oder Laderaum-Trennvorrichtung nach Anspruch 4, **dadurch gekennzeichnet, dass** beide Haltearme (15) durch ein Bewegungs-Kupplungselement (26; 51) bewegungseinheitlich miteinander verbunden sind.

6. Laderaum-Abdeck- und/oder Laderaum-Trennvorrichtung nach Anspruch 5, **dadurch gekennzeichnet, dass** das Bewegungs-Kupplungselement von einer beide Haltearme (15) miteinander verbindenden Kupplungstraverse (51) gebildet ist.

7. Laderaum-Abdeck- und/oder Laderaum-Trennvorrichtung nach einem der Ansprüche 1 bis 6, **dadurch gekennzeichnet, dass** jede armseitige Befestigungsstelle (16) am freien Ende eines Haltearms (15) angeordnet ist.

8. Laderaum-Abdeck- und/oder Laderaum-Trennvorrichtung nach einem der Ansprüche 1 bis 7, **dadurch gekennzeichnet, dass** jede armseitige Befestigungsstelle (16) und/oder jeder Endbereich (21) der Aufnahmehalterung (22) mit einem Riegelelement (28) für eine stufenweise lösbare Arretierung entlang der Bewegungsbahn (E) der armseitigen Befestigungsstelle (16) versehen ist.

9. Laderaum-Abdeck- und/oder Laderaum-Trennvorrichtung nach Anspruch 8, **dadurch gekennzeichnet, dass** die Aufnahmehalterung (22), mindestens eine armseitige Befestigungsstelle (16) oder die die beiden Haltearme (15) miteinander verbindende Kupplungstraverse (51) mit mindestens einem Anbindungselement (43) zur lösbaren Kupplung mit einer Sitzlehne (13, 14) versehen ist.

10. Laderaum-Abdeck- und/oder Laderaum-Trennvorrichtung nach einem der Ansprüche 1 bis 9, **dadurch gekennzeichnet, dass** jeder Haltearm ein um eine Drehachse (D) schwenkbarer Schwenkarm (15) ist.

11. Laderaum-Abdeck- und/oder Laderaum-Trennvorrichtung nach Anspruch 10, **dadurch gekennzeichnet, dass** die Drehachse (D) sich parallel oder koaxial bezüglich der Sitzlehnen-Schwenkachse (S) erstreckt.

12. Laderaum-Abdeck- und/oder Laderaum-Trennvorrichtung nach Anspruch 10 oder nach Anspruch 11, **dadurch gekennzeichnet, dass** als Bewegungs-Kupplungselement eine beide Schwenkarme (15) drehstarr miteinander verbindende Kupplungswelle (26) vorhanden ist.

13. Laderaum-Abdeck- und/oder Laderaum-Trennvorrichtung nach einem der Ansprüche 1 bis 9, **dadurch gekennzeichnet, dass** jeder Haltearm einen Teleskoparm (15) bildet.

14. Laderaum-Abdeck- und/oder Laderaum-Trennvorrichtung nach Anspruch 13, **dadurch gekennzeichnet, dass** sich die geradlinige Bewegungsbahn (E) jedes Teleskoparms (15) etwa horizontal oder zur Sitzlehnen-Schwenkachse (S) hin abwärts geneigt erstreckt.

15. Laderaum-Abdeck- und/oder Laderaum-Trennvorrichtung nach Anspruch 13 oder nach Anspruch 14, **dadurch gekennzeichnet, dass** jeder Teleskoparm (15) einen die armseitige Befestigungsstelle (16) tragenden freien Endbereich (50) bildet, welcher um eine sich etwa parallel zur Sitzlehnen-Schwenkachse (S) erstreckenden Neigeachse (49) schwenkbar, insbesondere schwenkarretierbar, ist.

## Claims

1. Storage space covering device and/or storage space partition device (10) for the storage or luggage space (K) of a vehicle, such as, for example, an estate-type vehicle or the like, having a receiving holder (22), such as, for example, having a blind housing, for at least one fabric web whose inner-side edge region is fixed, for example, to a winding shaft at the side of the receiving holder (22) and whose end-side free edge region (at 23; 24; 27) is to be releasably fixed at the vehicle side, the receiving holder (22) being retained adjacent to the rear side (45, 46) of a backrest of a seat arrangement (11) which has at least one pivotable seat backrest (13, 14), at least one movable retaining arm (15) being supported at least indirectly at the vehicle side and forming, for the receiving holder (22), an arm-side fixing location which, starting from an operating position of the storage space covering device and/or storage space separation device (10), which operating position is adjacent to the rear side (45, 46) of the seat backrest, can be moved substantially transversely relative to the pivot axis (S) of the seat backrest beyond the backrest, and which is to be releasably arrested incrementally or in a stepless manner over the movement path (E) thereof, **characterised in that** the fixing location is constructed as a pocket-like support (16) which has a substantially U-shaped cross-section which is delimited by a support web (17), a front fixing web (18), a rear fixing web (19) and by a delimitation web (20) which is directed outwards in each case.

2. Storage space covering device and/or storage space partition device according to claim 1, **characterised in that** the two end regions (21) of the receiving holder (22) are arranged in each case in a support (16).

3. Storage space covering device and/or storage space partition device according to claim 2, **characterised in that** each retaining arm (15) has a fixing location (16) at the arm side.

4. Storage space covering device and/or storage space partition device according to claim 3, **characterised by** two retaining arms (15).

5. Storage space covering device and/or storage space partition device according to claim 4, **characterised in that** both retaining arms (15) are connected to each other by means of a movement coupling element (26; 51) so as to be uniform in terms of movement.

6. Storage space covering device and/or storage space partition device according to claim 5, **characterised in that** the movement coupling element is formed by means of a coupling cross-member (51) which connects both retaining arms (15) to each other.

7. Storage space covering device and/or storage space partition device according to any one of claims 1 to 6, **characterised in that** each fixing location (16) at the arm side is arranged at the free end of a retaining arm (15).

8. Storage space covering device and/or storage space partition device according to any one of claims 1 to 7, **characterised in that** each arm-side fixing location (16) and/or each end region (21) of the receiving holder (22) is provided with a bolt element (28) for incrementally releasable arresting over the movement path (E) of the arm-side fixing location (16) .

9. Storage space covering device and/or storage space partition device according to claim 8, **characterised in that** the receiving holder (22), at least one arm-side fixing location (16) or the coupling cross-member (51) which connects the two retaining arms (15) to each other is provided with at least one connection element (43) for releasable coupling with a seat backrest (13, 14).

10. Storage space covering device and/or storage space partition device according to any one of claims 1 to 9, **characterised in that** each retaining arm is a pivot arm (15) which can be pivoted about a pivot axis (D).

11. Storage space covering device and/or storage space partition device according to claim 10, **characterised in that** the pivot axis (D) extends parallel or coaxially relative to the pivot axis (S) of the seat backrest.

12. Storage space covering device and/or storage space partition device according to claim 10 or claim 11, **characterised in that** a coupling shaft (26) which connects both pivot arms (15) to each other in a rotationally fixed manner is provided as a movement coupling element.

13. Storage space covering device and/or storage space partition device according to any one of claims 1 to 9, **characterised in that** each retaining arm forms a telescope-like arm (15).

14. Storage space covering device and/or storage space partition device according to claim 13, **characterised in that** the linear movement path (E) of each telescope-like arm (15) extends substantially horizontally or inclined in a downward direction towards the pivot axis (S) of the seat backrest.

15. Storage space covering device and/or storage space partition device according to claim 13 or claim 14, **characterised in that** each telescope-like arm (15) forms a free end region (50) which carries the arm-side fixing location (16) and which can be pivoted, in particular arrested in terms of pivoting, about an inclination axis (49) which extends substantially parallel with the pivot axis (s) of the seat backrest.

## Revendications

1. Dispositif de couverture d'espace de chargement et/ou de séparation d'espace de chargement (10) pour l'espace de chargement ou coffre à bagage (K) d'un véhicule, tel que, par exemple, une voiture commerciale ou analogue, avec une fixation de réceptacle (22), tel que, par exemple, un boîtier à volet roulant, pour au moins une bande de matériau, dans la zone de bordure située côté intérieur est fixé du côté de la fixation support (22) par exemple sur un arbre d'enroulement, et dans la zone de bordure libre (en 23; 24; 27) située côté d'extrémité sont à fixer de façon désolidarisable côté véhicule, où la fixation de réceptacle (22) est maintenue au voisinage de la face arrière de dossier (45, 46) d'un agencement de siège (11) présentant au moins un dossier (13, 14) pivotant, où au moins indirectement côté véhicule, au moins un bras support (15) déplaçable est monté, formant, pour la fixation de réceptacle (22), un point de fixation situé côté bras, qui, en partant d'une position de fonctionnement voisine de la face arrière de dossier (45, 46) du dispositif de recouvrement d'espace de chargement et/ou de séparation d'espace de chargement (10), est déplaçable sensiblement transversalement par rapport à l'axe de pivotement de dossier (S), sur ce dernier, et qui peut être bloqué de façon désolidarisable, par échelons ou de façon progressive et continue le long de sa trajectoire de déplacement (E), **caractérisé en ce que** le point de fixation est réalisé sous la forme de console (16) du genre d'une poche, présentant une section transversale à peu près en forme de U, délimitée par une nervure de pose (17), une nervure de fixation avant (18), une nervure de fixation arrière (19) et par une nervure de délimitation (20), tournée chaque fois vers l'extérieur.

2. Dispositif de recouvrement d'espace de chargement et/ou de séparation d'espace de chargement selon la revendication 1, **caractérisé en ce que** les deux zones d'extrémité (21) de la fixation de réceptacle (22) sont chacune disposées dans une console (16).

3. Dispositif de recouvrement d'espace de chargement et/ou de séparation d'espace de chargement selon la revendication 2, **caractérisé en ce que** chaque bras de maintien (15) présente un point de fixation (16) situé côté bras.

4. Dispositif de recouvrement d'espace de chargement et/ou de séparation d'espace de chargement selon la revendication 3, **caractérisé par** deux bras de maintien (15).

5. Dispositif de recouvrement d'espace de chargement et/ou de séparation d'espace de chargement selon la revendication 4, **caractérisé en ce que** les deux bras de maintien (15) sont reliés ensemble de façon cinématiquement unitaire, au moyen d'un élément de couplage de déplacement (26 ; 51).

6. Dispositif de recouvrement d'espace de chargement et/ou de séparation d'espace de chargement selon la revendication 5, **caractérisé en ce que** l'élément de couplage de déplacement est formé par une traverse de couplage (51), reliant ensemble les deux bras de maintien (15).

7. Dispositif de recouvrement d'espace de chargement et/ou de séparation d'espace de chargement selon l'une des revendications 1 à 6, **caractérisé en ce que** chaque point de fixation (16) situé côté bras est disposé à l'extrémité libre d'un bras de maintien (15).

8. Dispositif de recouvrement d'espace de chargement et/ou de séparation d'espace de chargement selon l'une des revendications 1 à 7, **caractérisé en ce que** chaque point de fixation (16) situé côté bras et/ou chaque zone d'extrémité (21) de la fixation de réceptacle (22) est muni(e) d'un élément de verrouillage (28) pour obtenir un blocage désolidarisable, échelonné, le long de la trajectoire de déplacement (E) du point de fixation (16) situé côté bras.

9. Dispositif de recouvrement d'espace de chargement et/ou de séparation d'espace de chargement selon la revendication 8, **caractérisé en ce que** la fixation de réceptacle (22) est munie d'au moins un point de fixation (16) situé côté bras, ou bien de la traverse de couplage (51) reliant ensemble les deux bras de maintien (15), avec au moins un élément d'attachement (43), pour assurer un couplage désolidarisable à un dossier de siège (13, 14).

10. Dispositif de recouvrement d'espace de chargement et/ou de séparation d'espace de chargement selon l'une des revendications 1 à 9, **caractérisé en ce que** chaque bras de maintien est un bras pivotant (15), susceptible de pivoter autour d'un axe de rotation (D).

11. Dispositif de recouvrement d'espace de chargement et/ou de séparation d'espace de chargement selon la revendication 10, **caractérisé en ce que** l'axe de rotation (D) s'étend parallèlement ou coaxialement à l'axe de pivotement de dossier (S).

12. Dispositif de recouvrement d'espace de chargement et/ou de séparation d'espace de chargement selon la revendication 10 ou selon la revendication 11, **caractérisé en ce qu'**est prévu comme élément de couplage de déplacement un arbre d'accouplement (26), reliant ensemble de façon rigide en rotation les deux bras pivotants (15).

13. Dispositif de recouvrement d'espace de chargement et/ou de séparation d'espace de chargement selon l'une des revendications 1 à 9, **caractérisé en ce que** chaque bras de maintien forme un bras télescopique (15).

14. Dispositif de recouvrement d'espace de chargement et/ou de séparation d'espace de chargement selon la revendication 13, **caractérisé en ce que** la trajectoire de déplacement (E) rectiligne de chaque bras télescopique (15) s'étend à peu près horizontalement, ou de façon inclinée vers le bas, par rapport à l'axe de pivotement de dossier de siège (S).

15. Dispositif de recouvrement d'espace de chargement et/ou de séparation d'espace de chargement selon la revendication 13 ou la revendication 14, **caractérisé en ce que** chaque bras télescopique (15) forme une zone d'extrémité (50) libre, portant le point de fixation (16) situé côté bras et qui est susceptible d'être pivoté, en particulier d'être bloqué en pivotement, autour d'un axe d'inclinaison (49) s'étendant à peu près parallèlement par rapport à l'axe de pivotement de dossier de siège (S).
